# FASCICULE DE BREVET EUROPEEN

(11) **EP 2 330 255 B1**
(45) Date de publication et mention de la délivrance du brevet: **07.11.2012**
(21) Numéro de dépôt: 10290626.0
(22) Date de dépôt: 25.11.2010
(51) Int. Cl.: E04B 1/343, B60P 3/34

(54) **Cellule habitable extensible et transportable**
Ausweitbare und transportierbare Wohnzelle
Extensible, transportable habitable cell

(30) Priorité: 07.12.2009 FR 0905885
(43) Date de publication de la demande: 08.06.2011
(73) Titulaire: Beau, Eric, 91190 Gif-sur-Yvette (FR)
(72) Inventeur: Beau, Eric, 91190 Gif-sur-Yvette (FR)
(74) Mandataire: Flavenot, Bernard

(56) Documents cités:
- WO-A1-2009/140848
- GB-A- 461 718
- US-A- 2 902 312

## Description

La présente invention a trait à une cellule habitable extensible et transportable, notamment à des fins touristiques en tant que résidence de loisir notamment mais non exclusivement, qui trouve une application avantageuse dans le domaine des caravanes ou analogues.

Une telle cellule habitable peut servir à la réalisation d'habitats mobiles tels que des caravanes, camping-cars, mobil-homes, ou constituer un habitat fixe pouvant être déposé temporairement ou à demeure dans un lieu pour constituer un abri, un bungalow ou d'autres habitations de ce type ne nécessitant pas une construction de fondations.

Un inconvénient des cellules habitables et transportables connues de ce type résulte de l'exigüité du volume, notamment en largeur et longueur. Cette exigüité est la conséquence du gabarit routier interdisant, hors transport exceptionnel, la circulation de véhicules excédant deux mètres cinquante de large, volume transporté compris.

Il existe déjà de telles cellules habitables comprenant une ossature de base associée à des parties extensibles,

Par exemple comme celles qui sont décrites et illustrées dans le WO 2009/140848, le US-A-2902312 et GB461718. Le document WO 2009/140048 divulgue les caractéristiques du preambule de la revendication 1. Dans ces cellules, le plancher du module extensible est constitué de deux plaques articulées en accordéon l'une par rapport l'autre qui ne permet pas un aménagement préalable définitif de l'intérieur de la cellule habitable.

Dans les cellules habitables selon ces trois documents les planchers sont télescopiques en se rangeant les uns sur les autres, ou sont pliables, mais ne permettent pas de faire passer la cellule de sa position sortie à sa postion rentrée, et réciproqument, par une seule commande de l'utilisateur, tout en gardant constamment à demeure l'aménagement intérieur mobilier de la cellule.

Le but de l'invention est donc de proposer une structure permettant d'obtenir de manière simple et rapide une cellule habitable extensible rigide comprenant au moins deux parties extensibles coulissantes l'une dans l'autre de manière télescopique, avec un minium de manoeuvre, dont l'extension puisse être facilement commandée notamment de façon automatique, et qui soit automatiquement habitable sans manipulations particulières, c'est-à-dire en conservant en place l'aménagement intérieur mobilier de la cellule, quelle que soit la position des parties de cette cellule.

Plus précisément, la présente invention a pour objet une cellule habitable extensible comportant au moins deux premier et second modules montés coulissants l'un dans l'autre de façon télescopique, comme définie dans les revendications annexées à la présente description.

D'autres caractéristiques et avantages de la présente invention, comme définie par la revendication 1, apparaîtront au cours de la description suivante donnée en regard des dessins annexés à titre illustratif mais nullement limitatif, dans lesquels :
Les figures 1, 2 et 3 sont des vues schématiques d'une cellule habitable conforme à l'invention et illustrent les opérations d'extension du volume de cette cellule, la figure 1 montrant la cellule dans son volume le plus restreint, la figure 3 montrant la cellule dans son volume le plus important et la figure 2 montrant la cellule lorsqu'elle présente un volume intermédiaire,
Les figures 4 et 5 représentent le système qui relie le panneau au module extensible.
Les figures 6 et 7 représentent une caravane et un camping-car réalisés au moyen de la cellule selon l'invention.
Les figures 8 et 9 représentent une cellule habitable selon l'invention, avec les modules rentrés les uns dans les autres (figure 8) et totalement sortis les uns des autres (figure 9).
Les figures 10 à 12 représentent de façon schématique une possibilité d'aménagement de la cellule habitable selon l'invention.

Il est tout d'abord précisé que, sur les figures, les mêmes références désignent les mêmes éléments, quelle que soit la figure sur laquelle elles apparaissent et quelle que soit la forme de représentation de ces éléments. De même, si des éléments ne sont pas spécifiquement référencés sur l'une des figures, leurs références peuvent être aisément retrouvées en se reportant à une autre figure.

La présente invention concerne une cellule habitable extensible et transportable, notamment à des fins touristiques en tant que résidence de loisir, qui trouve une application avantageuse dans le domaine des caravanes ou camping-cars.

La cellule habitable selon l'invention comporte un premier module 1 délimité par une première paroi 11 définissant un premier volume d'espace à vivre 12 de forme sensiblement cylindrique selon un premier axe 13.

Cette première paroi 11 comporte des panneaux latéraux 14, 15 dans leur ensemble sensiblement verticaux et formant les murs de l'espace à vivre 12, au moins un panneau courbe ou plan 16 venant reposer sur les panneaux latéraux 14, 15 pour former le toit de l'espace à vivre et un panneau horizontal 17 qui forme son plancher.

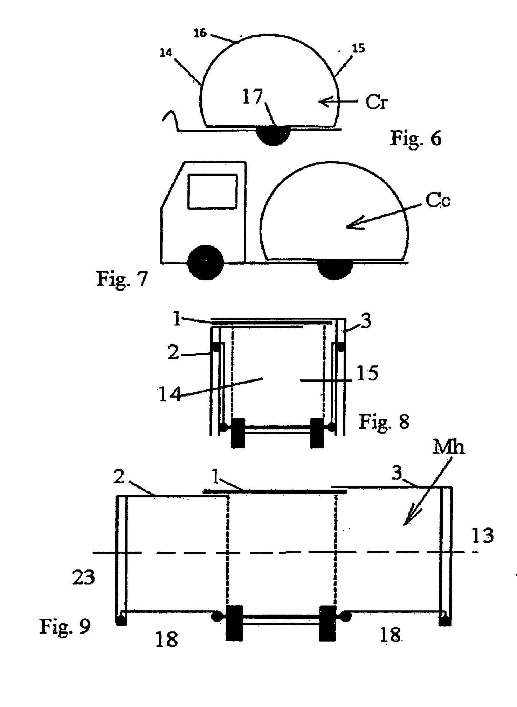

Tous ces panneaux mentionnés ci-dessus peuvent être de différentes formes et de différents matériaux. Par exemple, comme illustré sur les figures 6 et 7, ils peuvent être de forme cylindrique de révolution ou analogue, c'est-à-dire à section circulaire, mais aussi polygonale ou analogue.

Ce premier module 1 comporte en outre au moins un panneau de fond apte à être positionné verticalement 18 pour obturer la première paroi cylindrique 11 à une de ses extrémités 19 dans un plan sensiblement perpendiculaire au premier axe 13.

En accord avec la présente invention, des exemples de réalisation de ce panneau de fond 18 et de son montage, notamment avec le panneau plancher 17 horizontal, seront explicités ci-après.

La cellule habitable comporte en outre au moins un second module 2 ou 3 aussi de forme cylindrique selon un second axe qui est sensiblement confondu avec le premier axe 13.

Ce second module 2 définit un second volume d'espace à vivre 22 et est délimité par une seconde paroi cylindrique 21 composée essentiellement, comme la première paroi cylindrique 11, de deux panneaux verticaux opposés, d'un panneau formant le toit du second espace à vivre 22 et d'un panneau de fond vertical 23 réunissant les deux panneaux verticaux à une extrémité de la seconde paroi cylindrique 21, ce panneau de fond 23 étant situé dans un plan sensiblement perpendiculaire aux premier et second axes 13. Il est cependant à noter que ce second module 2 ne comporte pas de panneau pour former un plancher, contrairement au premier module 1.

Les premier et second modules 1, 2, 3 sont montés coulissants entre eux, de façon télescopique l'un dans l'autre, de façon connue en elle-même, suivant les premier et second axes 13.

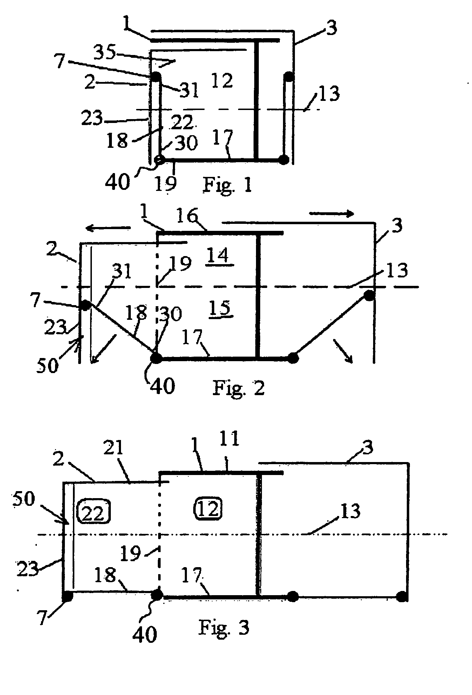

Les figures 1 à 3 illustrent le fait que le second module 2 est monté de façon télescopique dans le premier module 1, en passant par un interstice 35, figure 1, défini entre la paroi de fond 18 et la première paroi cylindrique 11 quand le second module 2 est complètement rentré télescopiquement dans le premier module 1 et que en conséquence cette paroi de fond 18 est dans une position verticale.

Selon une caractéristique de la présente invention, le panneau de fond 18 de la première paroi 11 est monté mobile par rapport au panneau plancher 17 et constitue le plancher du second module 2 (ou 3) quand ce dernier est sorti en extension de façon télescopique par rapport au premier module 1.

Cette paroi de fond 18 est par exemple articulée et fixée en rotation par un bord 30 par l'intermédiaire d'une charnière 40, sur le panneau plancher 17 du premier module 1 suivant un axe sensiblement perpendiculaire aux premier et second axes 13.

Selon la réalisation des figures 1 à 9, son bord opposé 31 est monté en coopération avec le panneau de fond vertical 23 du second module 2, par exemple par une glissière verticale intégrée à ce panneau de fond vertical 23 du second module 2 de façon que, par rotation (dans le sens senestrorsum en référence aux figures 1 à 3) autour de la charnière 40, la paroi de fond 18 soit apte à passer de sa position verticale (figure 1) à une position horizontale (figure 3) pour constituer au moins une partie du plancher du second module 2, de préférence en continuité du plancher 17 du premier module 1.

A titre d'exemple de réalisation, cette glissière 50 comporte une partie femelle 51 formant une rainure solidaire du panneau de fond vertical 23 de la seconde paroi 21 et une roulette 7 formant la partie mâle 52, cette roulette étant associée au bord 31 du panneau de fond 18 de la première paroi 11 et est montée rotative dans la partie femelle 51 de façon à pouvoir y coulisser notamment selon un mouvement de rotation, le long de cette rainure, les moyens d'attache, comme un étrier, de cette roulette 7 avec le bord 31 du panneau 18, passant à travers une fente longitudinale réalisée dans cette rainure.

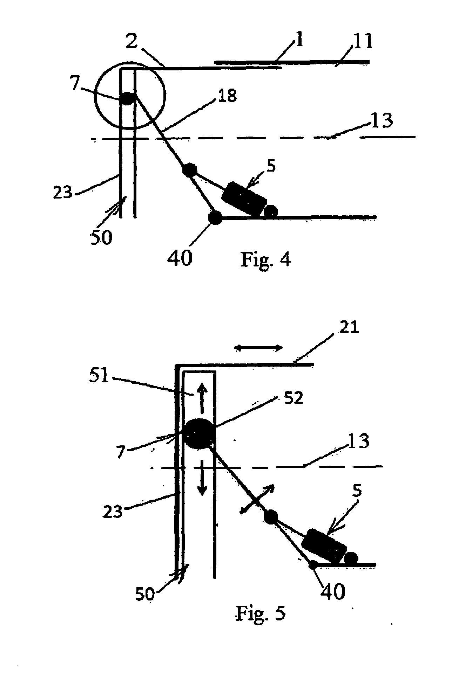

La figure 4 montre un moyen 5 de type vérin ou analogue permettant le basculement du panneau de fond 18, de sa position verticale jusqu'à sa position horizontale, et inversement son relèvement jusqu'à la position verticale.

La figure 5 est une vue agrandie telle qu'indiquée sur la figure 4 et montrant la liaison entre le panneau de fond 18 et le second module 2 à l'aide du moyen de type glissière 50.

Par exemple, la roulette 7, solidaire du panneau 18, coulisse du haut vers le bas et inversement dans la glissière 6 et permet la liaison entre le panneau 23 et le second module 2. Cet ensemble permet d'illustrer la force exercée sur le panneau 23 sur le module 2, illustré sur la figure 4. Un seul et unique moyen 5 peut être utilisé pour faire fonctionner l'ensemble panneau/module coulissant, depuis une position ouverte jusqu'à une position fermée, et réciproquement, ce qui limite l'encombrement.

La figure 6 est une représentation possible de la cellule habitable qui, en étant fixée sur un châssis roulant, devient une caravane Cr, ou qui, fixée de façon démontable ou indémontable sur un véhicule de type "châssis cabine", devient un camping-car Cc (figure 7).

Une telle cellule habitable peut aussi constituer un mobil-home Mh, figures 8, 9.

Chaque module 1, 2, 3, peut être réalisé sur le principe des abris de piscine télescopiques par l'utilisation de profilés d'aluminium cintrés servant de poutrelles et recevant, soit des panneaux composites alvéolaires translucides de type polycarbonate afin de laisser pénétrer la lumière, soit des feuilles d'aluminium réalisant ainsi le toit.

Le module fixe 1 peut comporter une porte coulissante permettant l'accès à l'espace habitable 12 et les deux modules coulissants 2, 3 seront équipés à leur extrémité de fenêtres laissant la pénétration des rayons lumineux assurant un éclairage naturel de l'intérieur de la cellule.

Les modules coulissants seront équipés de joints d'étanchéité de type EPDM ou analogue.

Les moyens d'ouverture et de fermeture de la cellule habitable par des vérins permettent en outre d'éviter toute ouverture intempestive non contrôlée lors du transport de la cellule en configuration repliée, et de commander automatiquement cette ouverture au moyen d'une seule commande qui peut se trouver par exemple à l'intérieur du premier module, mais aussi à l'extérieur de celui-ci.

La forme générale des composants de la cellule habitable conforme à l'invention peut être différente de celle représentée. Les modules coulissants peuvent ainsi avoir une forme ovale, rectangulaire ou autre.

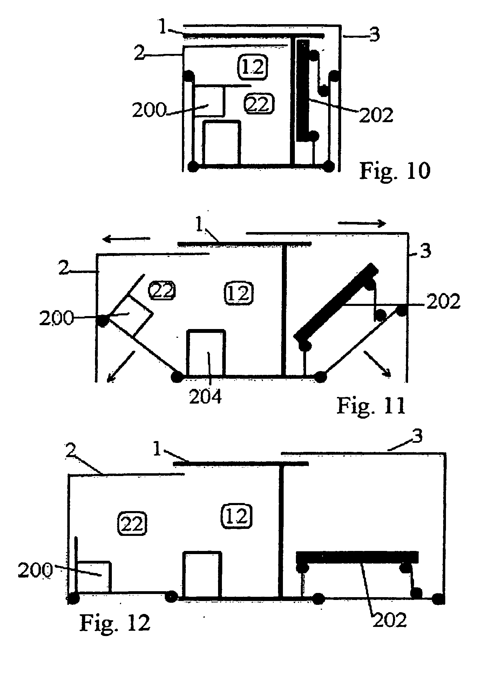

Les figures 10 à 12 représentent la cellule habitable selon l'invention comportant trois modules 1, 2, 3 en position fermée (figure 10) et en position complètement dépliée (figure 12) en passant par la position intermédiaire (figure 11). Ces représentations permettent de bien faire ressortir les avantages de la cellule habitable selon l'invention par rapport aux cellules de l'art antérieur, notamment celui qui est constitué par le fait qu'il est possible d'aménager préalablement les modules de façon définitive, sans avoir à déplacer les meubles quand la cellule passe de son mode rétracté à son mode déployé, et réciproquement, ce qui facilite le rangement qui se fait automatiquement.

La cellule selon cette réalisation est de dimensions suffisantes pour lui permettre de recevoir des meubles de rangement, mais aussi notamment un lit relevable 202, figures 10 à 12, au moyen de ses pieds articulés à chacune de leurs extrémités, pour former ainsi, avec le plancher 18 et le lit 202, un parallélogramme déformable qui permet l'abaissement et le relevage du lit 202 respectivement lors de la mise en place horizontale du plancher 18 (figure 3) ou son relevage en position verticale (figure 1) comme explicité ci-avant.

A titre d'exemple, le module 1 recevra par exemple une table 204, tandis que le module 3 recevra une banquette-lit 200 pour le coucher.

Le module fixe 1 peut en outre comprendre tous les éléments constituant une cuisine et une salle de bain avec douche et sanitaire.

Une fois ouverts, les modules 2 et 3 recevront des moyens d'appui au sol, de type béquilles, afin de stabiliser toute la cellule habitable dans sa position dépliée.

## Revendications

1. Cellule habitable extensible comportant au moins deux premier et second modules (1, 2, 3) montés coulissants l'un dans l'autre de façon télescopique,
• le premier module (1) étant délimité par une première paroi (11) définissant un premier volume d'espace à vivre (12) de forme sensiblement cylindrique selon un premier axe (13), cette première paroi (11) comportant des panneaux latéraux (14, 15), au moins un panneau de toit (16) monté en coopération avec les panneaux latéraux (14, 15), un panneau plancher (17) et un panneau de fond (18) apte à obturer la première paroi cylindrique (11) à une de ses extrémités (19) dans un plan sensiblement perpendiculaire au premier axe (13),
• le second module (2) étant délimité par une seconde paroi (21) définissant un second volume d'espace à vivre (22) de forme cylindrique selon un second axe sensiblement confondu avec le premier axe (13), cette seconde paroi (21) comportant des panneaux latéraux, un panneau de toit et un panneau de fond vertical (23) réunissant les panneaux latéraux à une extrémité de la seconde paroi cylindrique (21), ce panneau de fond vertical (23) étant situé dans un plan sensiblement perpendiculaire au premier et second axes (13),
• ledit panneau de fond (18) de la première paroi (11), constitué d'une seule plaque, étant monté mobile par rapport au panneau plancher (17) et constituant le plancher du second module (2) quand ce dernier est complètement sorti en extension par rapport au premier module (1),
la cellule habitable comportant en outre des moyens pour monter le panneau de fond (18) de la première paroi (11) rotatif, par un (30) de ses deux bords opposés (30, 31), par rapport à un bord du panneau plancher (17) de ladite première paroi (11),
**caractérisée par le fait qu'**elle comporte en outre des moyens pour monter l'autre bord (31) du dit panneau de fond (18) de la première paroi (11) en coopération avec le panneau de fond vertical (23) de la seconde paroi (21), constitués par une glissière (50), et des moyens (5) pour commander la rotation du panneau de fond (18) de la première paroi (11), constitués par un vérin (5).

2. Cellule habitable selon la revendication 1, **caractérisée par le fait que** ladite glissière (50) comporte une partie femelle (51) formant rainure solidaire du panneau de fond vertical (23) de la seconde paroi (21) et une roulette (7) formant sa partie mâle (52), ladite roulette étant associée à l'autre bord (31) du panneau de fond (18) de la première paroi (11) et montée rotative dans ladite partie femelle (51).

3. Cellule habitable selon l'une des revendications précédentes, **caractérisée par le fait qu'**elle comporte trois modules (1, 2, 3) montés de façon télescopique les uns dans les autres, les deux modules extrêmes étant montés de façon télescopique respectivement à l'intérieur et à l'extérieur du module central (1).

4. Cellule habitable selon l'une des revendications précédentes, **caractérisée par le fait qu'**elle constitue au moins l'un des habitacles suivants : caravane (Cr), camping-car (Cc), mobil-home (Mh).

## Claims

1. An expandable inhabitable booth having at least first and second modules (1, 2, 3) slidably mounted one in the other in telescopic manner,
the first module (1) being embodied by a first wall (11) defining a first living space volume (12) of substantially cylindrical shape along a first axis (13), said first wall (11) having two side panels (14, 15), at least one roof panel (16) mounted in co-operation with the side panels (14, 15), a floor panel (17), and an end panel (18) suitable for closing the first cylindrical wall (11) at one of its ends (19) in a plane that is substantially perpendicular to the first axis (13);
the second module (2) being embodied by a second wall (21) defining a second living space volume (22) of cylindrical shape along a second axis substantially coinciding with the first axis (13), the second wall (21) having side panels, a roof panel, and a cylindrical end panel (23) connecting together the side panels at one end of the second cylindrical wall (21), the vertical end panel (23) being situated in a plane substantially perpendicular to the first and second axes (13); and
said end panel (18) of the first wall (11), constituted as a single plate, being movably mounted relative to the floor panel (17) and constituting the floor of the second module (2) when the second module is fully extended out from the first module (1);
the inhabitable booth further including means for mounting the end panel (18) of the first wall (11) in pivotal manner via one (30) of its two opposite edges (30, 31), to pivot relative to an edge of the floor panel (17) of said first wall (11);
the booth being **characterized by** the fact that it further includes means constituted by a slideway (50) for mounting the other edge (31) of said end panel (18) of the first wall (11) to co-operate with the vertical end panel (23) of the second wall (21), and means constituted by an actuator (5) for controlling the pivoting of the end panel (18) of the first wall (11).

2. An inhabitable booth according to claim 1, **characterized by** the fact that said slideway (50) has both a groove-forming female portion (51) secured to the vertical end panel (23) of the second wall (21) and a male portion (52) formed by a wheel (7) associated with the other edge (31) of the end panel (18) of the first wall (11) and mounted to rotate in said female portion (51).

3. An inhabitable booth according to either preceding claim, **characterized by** the fact that it comprises three modules (1, 2, 3) telescopically mounted one in another, the two extreme modules being mounted telescopically respectively on the inside and on the outside of the central module (1).

4. An inhabitable booth according to any preceding claim, **characterized by** the fact that it constitutes at least one of the following cabins: caravan (Cr), camping car (Cc), mobile home (Mh).

## Patentansprüche

1. Erweiterbare bewohnbare Zelle mit wenigstens zwei Modulen (1, 2, 3), nämlich einem ersten und einem zweiten Modul, die teleskopartig ineinander gleitend montiert sind,
- wobei das erste Modul (10) durch eine erste Wand (11) begrenzt ist, die ein erstes Lebensraumvolumen (12) definiert, das eine im Wesentlichen zylindrische Form längs einer ersten Achse (13) besitzt, wobei diese erste Wand (11) seitliche Platten (14, 15), wenigstens eine Dachplatte (16), die in Zusammenwirkung mit den seitlichen Platten (14, 15) montiert ist, eine Fußbodenplatte (17) und eine Bodenplatte (18), die die erste zylindrische Wand (11) an ihren Enden (19) in einer zu der ersten Achse (13) im Wesentlichen senkrechten Ebene verschließen kann,
- wobei das zweite Modul (2) durch eine zweite Wand (21) begrenzt ist, die ein zweites Lebensraumvolumen (22) definiert, das eine zylindrische Form längs einer zweiten Achse, die mit der ersten Achse (13) im Wesentlichen zusammenfällt, besitzt, wobei diese zweite Wand (21) seitliche Platten, eine Dachplatte und eine vertikale Bodenplatte (23), die die seitlichen Platten an einem Ende der zweiten zylindrischen Wand (21) miteinander vereinigt, umfasst, wobei sich diese vertikale Bodenplatte (23) in einer zu der ersten und der zweiten Achse (13) im Wesentlichen senkrechten Ebene befindet,
- wobei die Bodenplatte (18) der ersten Wand (11), die aus einer einzigen Platte gebildet ist, in Bezug auf die Fußbodenplatte (17) beweglich montiert ist und den Fußboden des zweiten Moduls (17) bildet, wenn dieses Letztere vollständig aus dem ersten Modul (1) herausgezogen ist,
wobei die bewohnbare Zelle außerdem Mittel umfasst, um die Bodenplatte (18) der ersten Wand (11) mittels eines (30) ihrer zwei gegenüberliegender Ränder (30, 31) drehbar in Bezug auf einen Rand der Bodenplatte (17) der ersten Wand (11) zu montieren,
**dadurch gekennzeichnet, dass** sie außerdem Mittel, um den anderen Rand (31) der Bodenplatte (18) der ersten Wand (11) in Zusammenwirkung mit der vertikalen Bodenplatte (23) der zweiten Platte (21) zu montieren, die durch eine Gleitschiene (50) gebildet sind, und Mittel (5), um die Drehung der Bodenplatte (18) der ersten Wand (11) zu steuern, die durch einen Stellzylinder (5) gebildet sind, umfasst.

2. Bewohnbare Zelle nach Anspruch 1, **dadurch gekennzeichnet, dass** die Gleitschiene (50) einen Buchsenteil (51), der eine mit der vertikalen Bodenplatte (23) der zweiten Wand (21) fest verbundene Rinne bildet, und eine Laufrolle (7), die ihren Steckerteil (52) bildet, umfasst, wobei die Laufrolle dem anderen Rand (31) der Bodenplatte (18) der ersten Wand (11) zugeordnet ist und in dem Buchsenteil (51) drehbar montiert ist.

3. Bewohnbare Zelle nach einem der vorhergehenden Ansprüche, **dadurch gekennzeichnet, dass** sie drei Module (1, 2, 3) umfasst, die teleskopartig ineinander montiert sind, wobei die zwei Endmodule jeweils teleskopartig innerhalb bzw. außerhalb des mittleren Moduls (1) montiert sind.

4. Bewohnbare Zelle nach einem der vorhergehenden Ansprüche, **dadurch gekennzeichnet, dass** sie wenigstens einen der folgenden Wohnräume bildet: Wohnwagen (Cr), Camping-Fahrzeug (Cc), Wohnmobil (Mh).
